# EUROPEAN PATENT APPLICATION

(11) **EP 1 752 473 A1**
(43) Date of publication of application: **14.02.2007**
(21) Application number: 05728481.2
(22) Date of filing: 07.04.2005
(51) Int. Cl.: C08F 6/08

(54) **PROCESS FOR PRODUCING ISOBUTYLENE BLOCK COPOLYMER**

(30) Priority: 27.04.2004 JP 2004130883
(71) Applicant: Kaneka Corporation, Kita-ku Osaka-shi, Osaka 530-8288 (JP)
(72) Inventor: HATANO, Takanori, Kobe-shi, Hyogo, 6580001 (JP); FUKUDA, Ryuji, 5660072 (JP)
(74) Representative: Vossius & Partner
(86) International application number: PCT/JP2005/006841
(87) International publication number: WO 2005/105860

(57) **Abstract**

An object of the present invention is to provide a process for producing an isobutylene block copolymer, which process can provide a resin having a low content of a catalyst residue and high transparency. The object can be achieved by a process for producing an isobutylene block copolymer by living cationic polymerization using a Lewis acid, wherein, for removing the Lewis acid from a solution after the polymerization, the solution is charged into and mixed with water in which a nonionic surfactant with an HLB of 10 or less is contained in an amount of 0.01 to 0.5 part by weight based on 100 parts by weight of the isobutylene block copolymer.

## Description

### TECHNICAL FIELD

The present invention relates to a process for producing an isobutylene block copolymer which has a low content of a catalyst residue derived from a polymerization catalyst.

### BACKGROUND ART

As for a process for producing an isobutylene block copolymer comprising a polymer block comprising isobutylene as a major monomer and a polymer block comprising an aromatic vinyl monomer as a major monomer by cationic polymerization of isobutylene and an aromatic vinyl monomer such as styrene, a production process in a mixed solvent composed of a combination of methyl chloride and methylcyclohexane is disclosed (U.S. Pat. No. 4, 946, 899) . A process for producing an isobutylene block copolymer in a mixed solvent containing methylene chloride and hexane is also disclosed (Japanese Kohyo Publication Hei07-59601). These patent specifications only describe, as a process for removing a catalyst, reprecipitation by adding a solution into a large amount of methanol or deactivation of a catalyst by adding methanol into the solution, but they do not describe the amount of a catalyst residue or the influence of the same, etc.

On the other hand, as for a process for deactivating a catalyst after cationic polymerization, a process for deactivating the catalyst by charging it into a large amount of water is described (Japanese Kokai Publication Hei11-349648). No detail description of the amount of a catalyst residue and influence thereof to properties is found in this process either. The process is considered to be an advantageous process in view of industrialization such as mass production, compared with the above deactivation with methanol or reprecipitation. A process of reducing a catalyst residue by a metal alkoxide is also disclosed (Japanese Kokai Publication 2001-131222). The patent discloses a process in which the metal alkoxide is added to an obtained polymerization solution having cationic activity and a precipitated polymerization catalyst residue is separated by filtration.

Moreover, it is known that when the concentration of a resin is low, a catalyst residue can be generally removed by a conventional process of adding a cationic activity solution into a large amount of water and then washing it with water. However, in recent years, the improvement of productivity by increasing the concentration of a resin is required, and when the concentration of a resin is increased in polymerization, problems that the removal of a catalyst residue is difficult and the coloration of the obtained resin is conspicuous have been observed.

### SUMMARY OF THE INVENTION

In view of the above circumstances, an object of the present invention is to provide a process for producing an isobutylene block copolymer which has an extremely low content of a catalyst residue.

As a result of extensive study for solving the above problem, the present inventors have found that, when the polymer solution after completion of cationic polymerization is to be deactivated with water, the above problem can be solved by using water in which a nonionic surfactant with an HLB of 10 or less is contained, and have completed the present invention.

Specifically, the present invention relates to a process for producing an isobutylene block copolymer by living cationic polymerization using a Lewis acid, wherein, for removing the Lewis acid from a solution after the polymerization, the solution is charged into and mixed with water in which a nonionic surfactant with an HLB of 10 or less is contained in an amount of 0.01 to 0.5 part by weight based on 100 parts by weight of the isobutylene block copolymer.

A preferred embodiment of the present invention relates to a process for producing an isobutylene block copolymer, wherein the isobutylene block copolymer comprises a polymer block comprising isobutylene as a major monomer and a polymer block comprising an aromatic vinyl monomer as a major monomer.

A preferred embodiment of the present invention relates to a process for producing an isobutylene block copolymer, wherein the nonionic surfactant is a compound which has an alkyleneoxy chain and a hydrophobic organic group in the molecule.

A preferred embodiment of the present invention relates to a process for producing an isobutylene block copolymer, wherein the nonionic surfactant is a sorbitan derivative.

The present invention can provide an isobutylene block copolymer which has an extremely low content of a catalyst residue and high transparency.

### DETAILED DESCRIPTION OF THE INVENTION

The present invention will be described in detail below.

The isobutylene block copolymer according to the present invention comprises a polymer block comprising isobutylene (A) as a major monomer and a polymer block comprising an aromatic vinyl monomer (B) as a major monomer, and is obtained by cationic polymerization of monomers such as isobutylene and an aromatic vinyl monomer using a Lewis acid catalyst in the presence of an initiator.

Examples of aromatic vinyl monomers (B) in the present invention include styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2, 6-dimethylstyrene, β-methyl-2,4-dimethylstyrene, o-, m- or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m- or p-t-butylstyrene, o-, m- or p-methoxystyrene, o-, m-or p-chloromethylstyrene, o-, m- or p-bromomethylstyrene, styrene derivatives substituted with a silyl group, indene, vinylnaphthalene and the like. Examples of more preferred aromatic vinyl monomers include one or more monomers selected from the group consisting of styrene, α-methylstyrene, p-methylstyrene and indene; and styrene, α-methylstyrene or a mixture thereof is most preferably used in view of cost. Moreover, the polymer component comprising an aromatic vinyl monomer as a main component preferably contains the aromatic vinyl monomer in an amount of 60% by weight or more, more preferably in an amount of 80% by weight or more in view of the balance of physical properties, polymerization characteristics and the like.

The monomers other than aromatic vinyl monomers in the polymer component comprising aromatic vinyl monomers (B) as a major monomer according to the present invention are not particularly limited as long as they are monomer components capable of being cationically polymerized, and there may be mentioned aliphatic olefins, dienes, vinyl ethers, silanes, vinyl carbazole, β-pinene, acenaphthylene and the like. These can be used alone or in combination.

Examples of aliphatic olefin monomers include ethylene, propylene, 1-butene, 2-methyl-1-butene, 3-methyl-1-butene, pentene, hexene, cyclohexene, 4-methyl-1-pentene, vinylcylcohexene, octene, norbornene and the like.

Examples of diene monomers include butadiene, isoprene, cyclopentadiene, cyclohexadiene, dicyclopentadiene, divinylbenzene, ethylidene norbornene and the like.

Examples of vinyl ether monomers include methylvinyl ether, ethylvinyl ether, (n- or iso)propylvinyl ether, (n-, sec-, tert- or iso)butylvinyl ether, methyl propenyl ether, ethyl propenyl ether and the like.

Examples of silane compounds include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, γ-methacryloyloxypropylmethyldimethoxysilane and the like.

Moreover, the monomer component comprising isobutylene (A) as a major monomer according to the invention may or may not contain a monomer other than isobutylene, and typically contains isobutylene in an amount of 60% by weight or more, preferably in an amount of 80% by weight or more. The monomers other than isobutylene are not particularly limited as long as they can be cationically polymerized, and include, for example, the monomers described above and the like.

The proportion of the polymer block comprising isobutylene as a major monomer and the polymer block comprising an aromatic vinyl monomer as a major monomer is not particularly limited, but in terms of various physical properties, it is preferred that the polymer block comprising isobutylene as a major monomer is included in an amount of 95 to 40% by weight and the polymer block comprising an aromatic vinyl monomer as a major monomer is included in an amount of 5 to 60% by weight, and it is most preferred that the polymer block comprising isobutylene as a major monomer is included in an amount of 85 to 50% by weight and the polymer block comprising an aromatic vinyl monomer as a major monomer is included in an amount of 15 to 50% by weight.

Further, the number average molecular weight of the isobutylene block copolymer is not particularly limited, but in terms of flowability, processability, physical properties and the like, it is preferably in the range of 10, 000 to 500, 000, most preferably in the range of 30,000 to 400,000. When the number average molecular weight of the isobutylene block copolymer is lower than the above range, mechanical properties tend not to be sufficiently exhibited. On the other hand, when it exceeds the above range, the isobutylene block copolymer is disadvantageous in terms of flowability and processability.

The polymerization solvent used for the cationic polymerization in the present invention is not particularly limited as long as it is a solvent generally used for cationic polymerization, and a solvent composed of a halogenated hydrocarbon, a nonhalogenated solvent such as an aliphatic hydrocarbon or an aromatic hydrocarbon, or a mixture thereof can be used as the polymerization solvent. Examples of the above halogenated hydrocarbon which can be used include, but not particularly limited to, methyl chloride, methylene chloride, 1-chloropropane, 1-chloro-2-methylpropane, 1-chlorobutane, 1-chloro-2-methylbutane, 1-chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methylhexane, 1-chloro-3-methylhexane, 1-chloro-4-methylhexane, 1-chloro-5-methylhexane, 1-chloroheptane, 1-chlorooctane, 2-chloropropane, 2-chlorobutane, 2-chloropentane, 2-chlorohexane, 2-chloroheptane, 2-chlorooctane, chlorobenzene and the like. It is possible to use one of these alone or two or more of these in combination. Examples of the aliphatic and/or aromatic hydrocarbons which can be used in the present invention include butane, pentane, neopentane, hexane, heptane, octane, cyclohexane, methylcyclohexane, ethylcyclohexane, benzene, toluene, xylene, ethylbenzene and the like. It is possible to use one of these alone or two or more of these in combination. Particularly, use of a mixed solvent of a primary or secondary monohalogenated hydrocarbon having carbon atoms of 3 to 8 and an aliphatic or aromatic hydrocarbon is preferred in terms of the solubility and cost of the isobutylene block copolymer, and a combination of 1-chlorobutane and hexane, cyclohexane or methylcylohexane is the most suitable.

The initiator for use in cationic polymerization is preferably a compound represented by the following formula (1) : 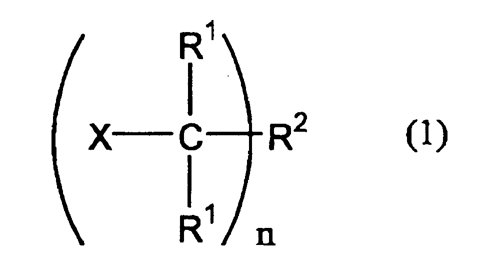 wherein a plurality of R¹ may be the same or different, and each denote a hydrogen atom or a monovalent hydrocarbon group having carbon atoms of 1 to 6. R² denotes a monovalent or polyvalent aromatic hydrocarbon group or a monovalent or polyvalent aliphatic hydrocarbon group. X denotes a halogen atom, an alkoxyl group or an acyloxy group, having carbon atoms of 1 to 6. n equals to the valence number of R² and denotes an integer of 1 to 6. When n is 2 or more, a plurality of X may be the same or different.

The compound represented by the above-mentioned formula (1) produces the carbon cation in the presence of a Lewis acid or the like to act as the starting point of cationic polymerization. Examples of the compounds represented by the general formula (1) to be used in the present invention include the following compounds: (1-chloro-1-methylethyl)benzene [C₆H₅C(CH₃)₂Cl], 1,4-bis(1-chloro-1-methylethyl)benzene [1,4-Cl(CH₃)₂CC₆H₄C(CH₃)₂Cl], 1,3-bis(1-chloro-1-methylethyl)benzene (1,3-Cl(CH₃)₂ CC₆H₄C(CH₃)₂Cl], 1, 3, 5-tris (1-chloro-1-methylethyl) benzene [1,3,5-(ClC(CH₃)₂)₃C₆H₃], 1,3-bis(1-chloro-1-methylethyl)-5-(tert-butyl)benzene [1,3-(C(CH₃)₂Cl)₂-5-(C(CH₃)₃)C₆H_{3]} and the like.

The especially preferable one among these is (1-chloro-1-methylethyl)benzene[C₆H₅C(CH₃)₂Cl]or bis (1-chloro-1-methylethyl) benzene [C₆H₄(C(CH₃)₂Cl)₂] (Here, bis(chloro-1-methylethyl)benzene is also referred to as bis(α-chloroisopropyl) benzene, bis(2-chloro-2-propyl)benzene or dicumyl chloride).

Further, a Lewis acid catalyst is allowed to coexist in producing the isobutylene block copolymer by polymerization. Such Lewis acids may be those capable of being used in cationic polymerization, and examples thereof which can be suitably used include metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃ and AlBr₃; and organic metal halides such as Et₂AlCl and EtAlCl₂. Above all, in view of the capability as a catalyst and the industrial availability, TiCl₄, BCl₃, and SnCl₄ are preferable. The amount of the Lewis acid to be used is not specifically limited, and it can be set in view of the polymerization properties of the monomer to be used, the polymerization concentration, or the like. Typically, the Lewis acid is used in an amount of 0.1 to 100 molar equivalent, preferably 1 to 60 molar equivalent relative to the compound represented by the general formula (1).

Further, an electron donor may be optionally allowed to coexist in producing the isobutylene block copolymer by polymerization. The electron donor is believed to have an effect of stabilizing the growing carbon cations in cationic polymerization, whereby a polymer having a controlled structure with a narrow molecular weight distribution is produced by addition of the electron donor. The electron donor capable of being used in the present invention is not specifically limited, and examples thereof include pyridines, amines, amides, sulfoxides, esters, metal compounds having an oxygen atom bonded to a metal atom, and others.

The amount of the components to be used may be suitably designed in accordance with the properties of the intended polymer. For example, the molecular weight of the polymer to be obtained can be determined by the molar equivalent ratio among isobutylene as a monomer and a cation-polymerizable monomer other than isobutylene, and the compound represented by the general formula (1). Typically, the molar equivalent ratio is set so that the block copolymer to be obtained has a number-average molecular weight of around 10,000 to 500,000.

In carrying out the polymerization, the components are mixed under cooling, for example, at a temperature in the range of -100°C to less than 0°C. In obtaining a balance between the energy costs and the stability of the polymerization, the particularly preferable temperature range is from -80°C to -30°C.

The isobutylene block copolymer in the present invention is not specifically limited as long as it contains a polymer block comprising isobutylene as a major monomer and a polymer block comprising monomers containing an aromatic vinyl monomer as a major monomer. For example, the isobutylene block copolymer may be any of a block copolymer, a diblock copolymer, a triblock copolymer, or a multi-block copolymer, having a straight-chain, branched, star-shaped or the like structure, and others. Examples of preferable block copolymers include a triblock copolymer of (a polymer block comprising an aromatic vinyl monomer as a major monomer)-(a polymer block comprising isobutylene as a major monomer) - (a polymer block comprising an aromatic vinyl monomer as a major monomer), a diblock copolymer of (a polymer block comprising an aromatic vinyl monomer as a major monomer)-(a polymer block comprising isobutylene as a major monomer), and a star block copolymer consisting of three or more arms of block copolymer comprising a polymer block comprising an aromatic vinyl monomer as a major monomer and a polymer block comprising isobutylene as a major monomer, or a mixture of two or more of these copolymers.

After completion of cationic polymerization, the isobutylene block copolymer produced as described above is in a mixed solution containing the block copolymer, a solvent, a Lewis acid and optionally an electron donor. It is necessary to remove a solvent, a Lewis acid and an electron donor in order to isolate the isobutylene block copolymer. Generally, it is possible to extract most of the Lewis acid and electron donor by bringing the mixed solution after completion of cationic polymerization into contact with water. Then, the solvent may be concentrated to isolate the isobutylene block copolymer. As described above, it is possible to remove most of the Lewis acid by bringing the mixed solution after completion of cationic polymerization into contact with water, and according to the present invention, it is possible to remove the Lewis acid residue remaining in trace amounts by adding a small amount of a nonionic surfactant in water.

Nonionic surfactants which can be used in the present invention is not specifically limited, and a compound having an alkyleneoxy chain and a hydrophobic organic group in the molecule is preferred. A compound having an ethyleneoxy chain or a propyleneoxy group as the alkyleneoxy chain is preferred. A sorbitan derivative having a sorbitol structure as a hydrophilic group is also effective. It is essential that the HLB value that indicates the degree of hydrophilicity of a nonionic surfactant is 10 or less. When a nonionic surfactant with an HLB of more than 10 is used, the mixed solution after completion of cationic polymerization and water form a stable emulsion, resulting in difficulty in separating them. The amount of the nonionic surfactant to be used should be in the range of 0.01 to 0.5 part by weight relative to 100 parts by weight of the isobutylene block copolymer. When the amount is less than 0.01 part by weight, the surfactant has little effect in reducing the size of droplets, resulting in low efficiency in removing the Lewis acid residue. When the surfactant is added in an amount of more than 0.5 part by weight, a stable emulsion is formed in a manner similar to the case where a nonionic surfactant with an HLB of more than 10 is used, resulting in extreme difficulty in separating water and the solution.

Examples of the nonionic surfactants which can be used in the present invention include the following compounds. Examples of nonionic surfactants containing alkyleneoxy chain which can be used in the present invention include polyoxyethylene nonylphenyl ethers such as Newcol-562 and Newcol-561H (from Nippon Nyukazai Co., Ltd.), polyoxyethylene alkyl ethers such as Newcol-1103, Newcol-1203 and Newcol-1204 (from Nippon Nyukazai Co., Ltd.), polyoxyethylene sorbitan derivatives such as Newcol-20, Newcol-60 and Newcol-80 (from Nippon Nyukazai Co., Ltd.) and the like. These nonionic surfactants may be used alone or in combination. Moreover, a defoamer of a nonionic type can be used. Examples thereof include SN Defoamer PC, SN Defoamer 247, SN Defoamer 485 (from San Nopco Limited) and the like.

The amount of water to be used in the present invention is in the range of 25 to 300 parts by weight relative to 100 parts of the isobutylene block copolymer solution, more preferably in the range of 30 to 200 parts by weight.

The point of the present invention is to allow the isobutylene block copolymer solution (containing the Lewis acid residue) and water to be emulsified and dispersed to a relatively fine particle size to promote migration of the Lewis acid residue or the intermediate thereof to the water phase, thereby removing the Lewis acid residue. However, excessive emulsification and dispersion would have the harmful effect that the oil and water are not separated, or it takes a long time to separate the oil and water. The amounts of the nonionic surfactant and water to be loaded in the range as described above are in the range where the efficiency in removing the Lewis acid residue is compatible with the separation of the oil and water. Warming at the time of the above-described operation of mixing and stirring is also effective means. Warming will reduce the viscosity of the isobutylene block copolymer solution, thereby facilitating mixing of the solution with water. In addition, the migration speed of the Lewis acid to water is estimated to be higher. The mixture is warmed preferably below the boiling point of the solvent to be used or of water.

The isobutylene block copolymer solution from which the Lewis acid residue is removed can be obtained by stirring a mixture of the isobutylene block copolymer solution (containing the Lewis acid residue), water and the nonionic surfactant, then leaving the mixture to stand until the oil phase and water phase are separated and removing the water phase. An acid component, which is formed by hydrolysis of the Lewis acid, remains in the obtained solution. The acid component can be removed by repeating washing with water several times.

The isobutylene block copolymer obtained by the process of the present invention can provide typical thermoplastic resins with vibration-damping properties and gas-barrier properties, and it can also be used as a material requiring transparency. Specifically, it can be used in applications such as food packaging, sundry goods, toys and sporting goods, stationery, automobile interiors and exteriors, civil engineering and architecture, home electric appliances, clothing and footwear, medical applications, sanitary materials, packaging and transporting materials and electric wires.

### BEST MODE FOR CARRYING OUT THE INVENTION

Hereinafter, the present invention will now be described further in detail with reference to examples, but the present invention is not limited to these examples. The molecular weight of each of the block copolymers shown in the Examples was determined by a GPC system made by Nihon Waters K. K. (column: Shodex K-804 (polystyrene gel) made by Showa Denko K. K., mobile phase: chloroform). The number-average molecular weight is represented by conversion in terms of polystyrene. The content of styrene was calculated from the ratio of the integral curve of the phenyl group site to that of the alkyl group site, by the measurement of ¹H-NMR (GEMINI 300: made by Varian Co., Ltd., solvent: CDCl₃) . Titanium, which is an indicator of the amount of the catalyst component remaining, was quantitatively determined by ICP-Mass spectroscopy (HP-4500 made by Yokokawa Analytical Systems Inc.). The color of the obtained resins was measured by a color difference meter (SE-2000 made by Nippon Denshoku Industries Co., Ltd.), using a pressed sheet of 2 mm thick.

### (Production Example 1)

A 2 L reaction vessel equipped with a stirrer was charged with 510 mL of 1-chlorobutane (dried on molecular sieves), 57 mL of hexane (dried on molecular sieves), 0.35 g of p-dicumyl chloride and 0.24 g of dimethylacetamide. The reaction vessel was cooled to -70°C, and then 165 mL of isobutylene was added. Further, 2.2 mL of titanium tetrachloride was added to start polymerization and the reaction was continued for 1.5 hours while stirring the solution at -70°C. Thereafter, 55 mL of styrene was added into the reaction solution and the reaction was further continued for one hour to obtain a polymer solution. It was found that the weight of the polymer in the polymer solution was 141 g.

### (Example 1)

A 3 L reaction vessel equipped with a stirrer was charged with 500 g of pure water and 0.15 g of Newcol-561H (from Nippon Nyukazai Co., Ltd.; HLB=3.3). The polymer solution obtained in Production Example 1 was charged into the reaction vessel, heated to 55°C and stirred for one hour. After the completion of stirring, the solution was left standing for 30 minutes to remove a water phase. Then, 300 g of pure water was added into the resulting polymer solution and the mixture was stirred for 30 minutes. After stopping agitation, the mixture was left standing for 30 minutes, and then a water phase was removed. The above-described washing operation with water was further repeated two times. The resulting polymer solution was a solution with extremely high transparency. The solvent was removed by distillation from the resultant polymer solution, and the resultant mixture was dried in a vacuum drier at 80°C for 24 hours to obtain an isobutylene block copolymer solid. Measurement of the molecular weight of the isobutylene block copolymer revealed that the number average molecular weight was 77, 000 and the molecular weight distribution was 1.48. Further, the content of styrene was found to be 31% by weight.

### (Example 2)

The operation was carried out in the same manner as in Example 1 except that Newcol-561H as a nonionic surfactant was replaced with Newcol-80 (from Nippon Nyukazai Co., Ltd.; HLB=6.4), which is a polyoxyethylene sorbitan derivative.

### (Example 3)

The operation was carried out in the same manner as in Example 1 except that Newcol-561H as a nonionic surfactant was replaced with SND 247 (from San Nopco Limited; HLB=4.0), which is a defoamer.

### (Comparative Example 1)

The operation was carried out in the same manner as in Example 1 except that a nonionic surfactant was not used.

### (Comparative Example 2)

The operation was carried out in the same manner as in Example 1 by using Newcol-561H in an amount of 0.01 g.

### (Comparative Example 3)

The operation was carried out in the same manner as in Example 1 by using Newcol-561H in an amount of 1.2 g.

### (Comparative Example 4)

The operation was carried out in the same manner as in Example 1 by using Newcol-504 which has an HLB of 16.

### (Evaluation of physical properties)

### Transparency of solution

The obtained polymer solution was put in a glass sample bottle, and was visually evaluated:
good: transparent solution
fair: having high transparency, but a little bluish
poor: having low transparency, and fairly blue
Color difference of resin sheets (YI: yellow index)
good: YI equal to or less than 10 (a resin sheet having high transparency)
fair: YI from 10 to 30 (a resin sheet exhibiting a pale yellowish color)
poor: YI more than 30 (a resin sheet of yellow color)

Table 1 shows transparency of polymer solutions, color difference of resin sheets and Ti-content in resins for Examples and Comparative Examples.

**Table 1**

| Types and amounts of nonionic surfactants used and their physical properties | | | | | | | |
|---|---|---|---|---|---|---|---|
| | Examples | | | Comparative Examples | | | |
| | 1 | 2 | 3 | 1 | 2 | 3 | 4 |
| N-561H (g) | 0.15 | - | - | - | 0.01 | 1.2 | - |
| N-80 (g) | - | 0.15 | - | - | - | - | - |
| SND247 (g) | - | - | 0.15 | - | - | - | - |
| N-504 (g) | - | - | - | - | - | - | 0.15 |
| Transparency of solution | good | good | good | poor | fair | - | - |
| YI of resin sheets | 7 | 8 | 5 | 32 | 24 | - | - |
| Ti-content in resins (ppm) | 9 | 11 | 10 | 96 | 70 | - | - |

In Examples 1 to 3, each polymer solution had high transparency, and dried resins themselves also had high transparency. The Ti-atom content in resins in Examples 1 to 3 was around 10 ppm, which shows the removal of Ti atoms in an amount of 99.8% or more.

In Comparative Example 1 in which a nonionic surfactant, which is an essential component of the present invention, is not used, the polymer solution had low transparency and the dried resin sheet exhibited yellow color. The Ti-atom content in resins was 96 ppm, which shows that Ti atoms about 10 times higher than Examples are remaining.

When a nonionic surfactant, which is an essential component of the present invention, was used in a small amount (Comparative Example 2), the polymer solution had a little lower transparency than in Examples and the resin sheet exhibited some coloration. The Ti-atom content in resins was 70 ppm, which shows that Ti atoms about 7 times higher than Examples are remaining.

When a nonionic surfactant, which is an essential component of the present invention, was used in a large amount (Comparative Example 3), the separation of the polymer solution from water was deteriorated. Although oil/water separation has been completed after leaving the mixture for one day, fine droplets were remaining in the oil phase. When a nonionic surfactant having a high HLB was used (Comparative Example 4), the polymer solution was not separated from water and the mixture maintained a stable emulsion after it is left standing for seven days.

From Examples and Comparative Examples as described above, it has been found that use of a nonionic surfactant with an HLB of 10 or less can effectively remove the Lewis acid residue from the isobutylene block copolymer and the resulting sheet has high transparency.

## Claims

1. A process for producing an isobutylene block copolymer by living cationic polymerization using a Lewis acid, wherein, for removing the Lewis acid from a solution after the polymerization, the solution is charged into and mixed with water in which a nonionic surfactant with an HLB of 10 or less is contained in an amount of 0.01 to 0.5 part by weight based on 100 parts by weight of the isobutylene block copolymer.

2. The process for producing an isobutylene block copolymer according to claim 1, wherein the isobutylene block copolymer comprises a polymer block comprising isobutylene as a major monomer and a polymer block comprising an aromatic vinyl monomer as a major monomer.

3. The process for producing an isobutylene block copolymer according to claim 1 or 2, wherein the nonionic surfactant is a compound which has an alkyleneoxy chain and a hydrophobic organic group in the molecule.

4. The process for producing an isobutylene block copolymer according to claim 1 or 2, wherein the nonionic surfactant is a sorbitan derivative.
